# EUROPÄISCHE PATENTANMELDUNG

(11) **EP 1 465 308 A2**
(43) Veröffentlichungstag der Anmeldung: **06.10.2004**
(21) Anmeldenummer: 04005760.6
(22) Anmeldetag: 11.03.2004
(51) Int. Cl.: H02G 3/04, H01B 3/44, B29C 61/06

(54) **Wärmeschrumpfbarer Schutzschlauch**

(30) Priorität: 04.04.2003 DE 10315631
(71) Anmelder: REHAU AG + Co, 95111 Rehau (DE)
(72) Erfinder: Schmidt, Steven, 95182 Döhlau (DE); Sammet, Ulli, 95111 Rehau (DE); Eibl, Stefan, 95032 Hof (DE)

(57) **Zusammenfassung**

Die Erfindung betrifft einen wärmeschrumpfbaren Schutzschlauch mit verbesserter Abrieb-, Chemikalien- und Wärmeformbeständigkeit bei hohen Temperaturen.
Diese verbesserten Eigenschaften werden erreicht durch eine Materialzusammensetzung, die besteht aus
- mindestens einer Abriebkomponente, umfassend Thermoplaste mit einem Schmelzpunkt oder Glasübergangspunkt größer 130°C
- mindestens einer Weich- und/oder Rückschrumpfkomponente, umfassend Thermoplaste mit einem Schmelzpunkt oder Glasübergangspunkt kleiner 130°C
- mindestens einer Additivkomponente.

Die Herstellung des wärmeschrumpfbaren Schutzschlauches erfolgt vorzugsweise nach dem Coextrusionsverfahren, die Vernetzung geschieht mittels Elektronenstrahl bei einer Strahlendosis zwischen 50 und 150 kGyy.

## Beschreibung

Die Erfindung betrifft einen wärmeschrumpfbaren Schutzschlauch mit verbesserter Abrieb-, Chemikalien- und Wärmeformbeständigkeit bei hohen Temperaturen.

Eine wichtige Anwendung für wärmeschrumpfbare Schutzschläuche findet sich unter anderem in Fahrzeugen. Schlauchbögen aus Kautschuk mit und ohne Gewebearmierung, Kabelbäume, elektrische Leitungen und Rohrleitungssysteme, wie bspw. an Klimaanlagen, sind im alltäglichen Betrieb unterschiedlichen Einflüssen, wie wechselnden Temperaturen, Witterungsbedingungen oder mechanischen Beanspruchungen, ausgesetzt. Je nach Einbausituation in Fahrzeugen ergibt sich daher die Notwendigkeit diese Einbauteile - zumindest abschnittsweise - zu schützen. Aus dem Stand der Technik ist hierzu eine Ummantelung mit wärmeschrumpfbaren Schutzschläuchen aus Polyvinylchlorid, Polyesterelastomeren, Polyamid, elektronenstrahlvernetztem Polyethylen oder einem Gewebe aus vernetzten Polyethylenterephthalat- und Polyethylenfäden bekannt.

Insbesondere im Automobilbau werden die Motorleistungen kontinuierlich gesteigert; dies bedingt eine Erhöhung der Motorabwärmetemperatur. Weiterhin wird durch Auflagen zur Fahrzeugsicherheit die Packungsdichte im Motorraum erhöht. Unter Berücksichtigung der erhöhten Motorabwärmetemperaturen genügen daher die herkömmlichen, wärmeschrumpfbaren Schutzschläuche aus Polyvinylchlorid oder vernetztem Polyethylen den zukünftigen Anforderungen der Fahrzeughersteller nicht mehr.

Die Patentschriften US 3 086 242 und US 3 597 372 beschreiben die Verwendung von wärmeschrumpfbaren Schutzschläuchen auf Basis von vernetztem Polyethylen. Nachteilig ist hierzu bekannt, dass die Abriebbeständigkeit bei Temperaturen von 100 °C bereits deutlich zurück geht, bei Temperaturen oberhalb 130°C ist die Abriebbeständigkeit nicht mehr gegeben.

Ferner ist bekannt, dass mit Überschreiten des Schmelzpunktes von Polyethylen die Chemikalienbeständigkeit gegenüber kohlenwasserstoffhaltigen Produkten (Öle, Fette, Schmier- und Kraftstoffe etc.) abnimmt.

Die US 4 444 816 offenbart die Herstellung und Verwendung von wärmeschrumpfbaren Schutzschläuchen, die auf Mischungen von verschiedenen teilkristallinen Polyamiden basieren, wobei der Anteil des Polyamids (PA) bei größer 80 Gew.-% liegt. Derartige wärmeschrumpfbare Schutzschläuche verfügen zwar über die gewünschte Chemikalien- und Temperaturbeständigkeit, konnten sich aber in der Praxis nicht durchsetzen, da sie einerseits - insbesondere bei Einsatz der Spezialpolymere PA 11 und/oder PA 12 - zu teuer sind, andererseits - bei den üblichen Verarbeitungstemperaturen von ca. 240 °C und im Falle von Außendurchmessern größer 50 mm - ein unvollständiges Rückschrumpfverhalten aufweisen und schließlich über eine in vielen Fällen unzureichende Flexibilität verfügen.

Die unter der Bezeichnung HFT 5000 hergestellten wärmeschrumpfbaren Schutzschläuche bestehen aus einem Mischgewebe von vernetzten Polyethylenterephthalat- (PET) und Polyethylen- (VPE)-Fäden. Der vorgenannte PET-VPE-Gewebeschlauch kombiniert die Abriebbeständigkeit von PET bei hohen Temperaturen mit dem Rückschrumpfverhalten von strahlenvernetztem Polyethylen bei niedrigen Temperaturen. Nachteilig sind hierbei die rauhe Oberfläche, die zu Verschmutzungen führt, das Aufspleißen der Längsnaht am Gewebeschlauchende und die eingeschränkte Barriereeigenschaft gegenüber fahrzeug- oder witterungsbedingten Flüssigkeiten.
Hier setzt die Erfindung ein, die sich zur Aufgabe gestellt hat, einen wärmeschrumpfbaren Schutzschlauch zu schaffen, der die aufgeführten Nachteile des Standes der Technik vermeidet.

Überraschenderweise gelang die Lösung der Aufgabe durch Schutzschläuche, wie sie in Anspruch 1 beschrieben sind.
Bevorzugte Ausführungsformen bzw. Weiterbildungen der Erfindung finden sich in den Unteransprüchen und Nebenansprüchen.

Erfindungsgemäß erfolgt die Auswahl von Polymeren für die Ausbildung der einzelnen Schichten vorzugsweise sowohl nach ihrem thermischen Verhalten, als auch nach ihren temperaturabhängigen mechanischen Eigenschaften.
Dabei unterscheidet man erfindungsgemäß einerseits zwischen einer "hochschmelzenden Abriebkomponente" deren Glasübergangspunkt Tg über 130°C liegt und andererseits einer "Weichkomponente" und/oder "Rückschrumpfkomponente", deren Tg kleiner/gleich 130°C beträgt.

Erfindungsgemäß können die wärmeschrumpfbaren Schutzschläuche in einem einschichtigem oder einem mehrschichtigem Aufbau ausgeführt werden.
Bei mehrschichtigem Aufbau wird ein zweischichtiger oder dreischichtiger Aufbau aufgrund leichter Verarbeitbarkeit und ausreichender Prozessstabilität bei der Extrusion favorisiert.

Wärmeschrumpfbare Schutzschläuche mit zweischichtigem Aufbau bestehen aus einer abriebfesten Außenschicht und einer flexiblen Innenschicht.
Beim dreischichtigen wärmeschrumpfbaren Schutzschlauch wird zur Verbesserung der Schichthaftung zusätzlich zwischen abriebfester Außenschicht und flexibler Innenschicht eine haftvermittelnde Zwischenschicht eingebracht.

Für die einzelnen Schichten werden die für den jeweiligen Anwendungsfall maßgeschneiderte Polymere oder Polymermischung verwendet.
Die Dicken der jeweiligen Schichten sind vorzugsweise über ihre gesamte Länge konstant.

Zum ressourcenschonenden Einsatz von beispielsweise Spezialpolymeren und/oder Additiven und/oder zum gezielten Aufbau funktionaler Schichten bzw. zur Verbesserung der Haftung des Masse- bzw. Schichtverbundes hat sich in der Praxis auch der Einsatz von Gradientenschichten bewährt.

Erfindungsgemäß wird man für einen wärmeschrumpfbarer Schutzschlauch mit verbesserter Abrieb-, Chemikalien- und Wärmeformbeständigkeit bei hohen Temperaturen für den Einsatz in Fahrzeugen die Abriebkomponente mit dem Tg > 130°C aus der Gruppe der teilkristallinen Polyamide und/oder amorphen Polyamide und/oder Polyetherblockamide und/oder Polyolefine auswählen.

Die Abriebkomponente (A) umfasst demnach teilkristalline Polyamide (PA), wie PA 6 und/oder PA 66 und/oder PA 6 / 66 und/oder PA 12 und/oder PA 11 und/oder PA 612 und/oder PA 610 und/oder PA 669 und /oder PA 46 und/oder PA 6 / 6T, und/oder amorphe Polyamide, umfassend die Materialien PA 6-3-T und/oder PA 12 / MACMI und/oder PA 6I / MACMI / MACMT und/oder PA 6I / 6T / MACMT und/oder PA 6I / 6 und/oder PA MXD6.
Weiterhin hat sich gezeigt, dass die Abriebkomponente auch aus Anteilen von Polyolefinen, umfassend die Materialien high density polyethylene (HDPE) und/oder ultra high molecular weight polyethylene (UHMWPE) und/oder high molecular weight polyethylene (HMWPE) und/oder Cycloolefincopolymer (COC) und/oder Cycloolefinpolymer (COP) und/oder Poly-4-methyl-1-penten, bestehen kann.

Die Weichkomponente und auch die Rückschrumpfkomponente (B) bestehen erfindungsgemäß aus Materialien mit einem Schmelzpunkt Tₘ oder Glasübergangspunkt T_{g} ≤ 130°C, und sind ausgewählt aus der Gruppe der teilkristallinen Polyamide und/ oder amorphen Polyamide und/oder Polyetherblockamide und/oder thermoplastische Polyurethane und/oder Polyolefine und/oder Polymere mit funktionellen Gruppen, besteht.
Beispiele für solche teilkristallinen Polyamide sind die Copolyamide PA 6 / 66 / 12 und/oder PA 6 / 12 und/oder PA 6 / 11. Des weiteren sind auch das amorphe Polyamide PA 61 / 6T und/oder Polyetherblockamide (PEBA) und/oder thermoplastische Polyurethane (TPU) als Weich- und/oder Rückschrumpfkomponente geeignet.
Vorzugsweise werden als Weich- und Rückschrumpfkomponente Polyolefine, umfassend Homo- und Copolymere aus Ethylen und/oder Propen und/oder Buten und/oder Isopren und/oder Ethylidennorbornen und/oder Cyclopentadien und/oder Butadien und/oder Ester der Acrylsäure oder Methacrylsäure mit Methanol oder Ethanol oder Butanol und /oder Vinylacetat, wie linear low density polyethylene (LLDPE) und/oder low density polyethylene (LDPE) und/oder ultra low density polyethylene (ULDPE) und/oder metallocene linear low density polyethylene (mLLDPE) und/oder very low density polyethylene (VLDPE) und/oder low molecular weight polyethylene (LMWPE) und/oder middle density polyethylene (MDPE) und/oder Polypropylen (PP) und/oder Polyolefinelastomere und/oder Polybutadien und/oder Ethylenmethylacrlat-Copolymer (EMA) und/oder Ethylenethylacrylat-Copolymer (EEA) und/oder Ethylenbutylacrylat-Copolymer (EBA) und/oder Ethylenvinylacetat-Copolymer (EVA) und/oder Cycloolefincopolymere (COC) und/oder Cycloolefinpolymere (COP) und/oder Kautschuke (EPM, EPDM, EPR)} und/oder Polyolefincompounds (TPO, TPE-V) verwendet. Polyolefinelastomere sind Copolymere des Ethylens mit Buten und/oder Penten und/oder Hexen und/oder Octen und/oder Isomeren hiervon.

Weiterhin wird vorgeschlagen, dass die Weich- und/oder Rückschrumpfkomponente aus Polymeren mit funktionellen Gruppen, umfassend Homo- und Copolymere aus Ethylen und/oder Propen und/oder Buten und/oder Isopren und/oder Hexen und/oder Octen und/oder Ethylidennorbornen und/oder Cyclopentadien und/oder Butadien und/oder Ester der Acrylsäure oder Methacrylsäure mit Methanol oder Ethanol oder Butanol und/oder Vinylacetat mit zusätzlichen reaktiven Gruppen, die als funktionelle Endgruppen und/oder gepfropft und/oder als funktionelle Gruppe eines Monomers im Polymer enthalten und diese reaktiven und funktionellen Gruppen Hydroxy-, Amino-, Carbonsäure-, Carbonsäureester-, Carbonsäureanhydrid-, Imid-, Amid-, Oxazolinoder Epoxygruppen sind, bestehen. Derartige Polymere mit funktionellen Gruppen können Maleinsäureanhydrid-(MAH)-gepfropftes (g) Polyethylen PE-g-MAH und/oder LLDPE-g-MAH und/oder HDPE-g-MAH und/oder POE-g-MAH und/oder PP-g-MAH und/oder EPM-g-MAH und/oder EPDM-g-MAH und/oder EMA-g-MAH und/oder EVA-g-MAH und/oder EPR-g-MAH und/oder EBA-g-MAH sein. Polymere mit funktionellen Gruppen können auch Acrylsäure-(AA)-gepfropftes Polyethylen PE-g-AA und/oder EPM-g-AA und/oder EPDM-g-AA und/oder EMA-g-AA und/oder PP-g-AA und/oder EVA-g-AA und/oder POE-g-AA sein und/oder aus Glycidylmethacrylat-(GMA)-gepfropftem Polyethylen PE-g-GMA und/oder EPM-g-GMA und/oder EPDM-g-GMA und/oder EMA-g-GMA und/oder PP-g-GMA und/oder EVA-g-GMA und/oder POE-g-GMA bestehen. Des weiteren können Polymere mit funktionellen Gruppen aus Polybutadien-MAH-Addukten und/oder hydroxyterminierten Polybutadienen und/oder aus EVA-MAH- und/oder E-AA-MAH- und/oder EBA-MAH- und/oder EMA-MAH und/oder EVA-GMA- und/oder E-AA-GMA- und/oder EBA-MAH- und/oder EBA-GMA-Terpolymeren bestehen.
Es hat sich gezeigt, dass die Weich- und/oder Rückschrumpfkomponente vorzugsweise aus einer Mischzusammensetzung besteht.

Die Additivkomponente (C) besteht aus Anteilen von Vernetzern und/oder Vernetzungsverstärkern und/oder Stabilisatoren und/oder Gleitmitteln und/oder Antistatika und/oder Flammschutzmittel und/oder geruchs- und geschmackssensitiven Stoffen und/oder Additiven zur Erhöhung der Abrieb- oder Temperaturbeständigkeit und/oder Färbemittel und/oder Weichmacher.
Gemäß der Erfindung sind Beispiele für Vernetzer und/oder Vernetzungsverstärker Triallylcyanurat (TAC) und/oder Triallylisocyanurat (TAIC) und/oder Trimethylolpropantriacrylat (TMA) und/oder Trimethylolpropantrimethacrylat (TRIMM) und/oder 1,2-Polybutadien und/oder Pentaerithritoltriacrylat und/oder Pentaerithritoltrimethacrylat und/oder Pentaerithritoltetraacrylat und/oder Pentaerithritoltetramethacrylat und/oder Dipentaerithritolpentaacrylat und/oder Dipentaerithritolpentamethacrylat und/oder Ditrimethylolpropantetraacrylat und/oder Ditrimethylolpropantetramethacrylat geeignet

Mit der Verwendung von geruchs- und/oder geschmackssensitive Stoffen, wie Denatoniumverbindungen, umfassend Denatoniumbenzoat und/oder Denatoniumoleoresinat und/oder Denatoniumsaccharid, und/oder Capsaicine, können Nagetiere abgewehrt werden.

Vorteilhaft sind zur Erhöhung der Abrieb- und/oder Temperaturbeständigkeit des wärmeschrumpfbaren Schutzschlauches Additivkomponenten, wie Erucasäure und/oder fluorhaltige Polymere (Polytetrafluorethylen (PTFE) und/oder Polyfluoralkoxyverbindungen (PFA) und/oder fluorinierte Ethylen-Propylen-Copolymere (FEP)), und/oder Ruße und/oder Graphite und/oder exfolierte Graphite und/oder Silikate und/oder Nanofüllstoffe.
Nanofüllstoffe aus Smectit-Schichtsilikaten der Montmorillonit- oder Beidellit-Reihe, umfassend Montmorillonit Na_{0,33}{(Al_{1,67}Mg_{0,33})(OH)₂[Si₄O₁₀]} und/oder Beidellit (Ca,Na)_{0,3}{Al₂(OH)₂[Al_{0,5}Si_{3,5}O₁₀]} und/oder Nontronit Na_{0,33}{Fe₂(OH)₂[Al_{0,33}Si_{3,67}O₁₀]} und/oder Saponit (Ca,Na)_{0,33}{(Mg,Fe)₃(OH)₂[Al_{0,33}Si_{3,67}O₁₀]} und/oder Hectorit Na_{0,33}{Mg,Li)₃(OH, F)₂[Si₄O₁₀]} und/oder exfolierte Schichtsilikate und/oder Organoclays verbessern die Abriebbeständigkeit bei erhöhter Temperatur.
Ebenso werden Aerosile aus Silikaten und/oder Titandioxid und/oder Zirkoniumdioxid und/oder Dialuminiumtrioxid zur Erhöhung der Abrieb- oder Temperaturbeständigkeit als Additivkomponente vorgeschlagen.

Erfindungsgemäß werden monodisperse Metalloxidnanopartikel, die aus RSi(OR')₃ und/oder RR"Si(OR')₂ und/oder R₂Si(OR')₂ und/oder Ti(OR)₄ und/oder Zr(OR)₄ und/oder Al(OR)₃ und/oder Mischungen hiervon gebildet hiervon, gebildet werden, als Nanofüllstoffe verwendet.
Ferner hat sich gezeigt, dass die Nanofüllstoffe aus nanoskaligen Metalloxidfasern, umfassend Titandioxidfasern, TiO₂ (Rutil und/oder Anatas und/oder Brookit-Modifikation), und/oder Zirkoniumdioxidfasern, ZrO₂ (monoklines α-ZrO₂ und/oder tetragonales β-ZrO₂ und/oder kubisches γZrO₂), und/oder Dialuminumtrioxidfasern, Al₂O₃ (hexagonales α-Al₂O₃ und/oder γ-Al₂O₃ mit kubisch dichtester Packung), und/oder aus nanoskaligen Mischoxidfasern, umfassend Al₂O₃ und/oder TiO₂ und/oder ZrO₂ und/oder Y₂O₃ und/oder B₂O₃ und/oder SiO₂ und/oder FeO und/oder Fe₂O₃ und/oder Na₂O und/oder CaO und/oder MgO und/oder K₂O, bestehen.
Weiterhin wird vorgeschlagen, dass die nanoskaligen Metalloxidfasern und/oder nanoskaligen Mischoxidfasern einzeln und/oder in Bündeln vorliegen, wobei die Faserlänge 50 nm bis 2 cm, der Außendurchmesser 1 nm bis 500 nm und das Längen-Dickenverhältnis > 20 beträgt.
Vorzugsweise hat sich gezeigt, dass die Nanofüllstoffe aus Kohlenstoffnanoteilchen, umfassend armchair single-wall carbon nantubes (SWCNT) und/oder zigzag single-wall carbon nanotubes und/oder chiral single-wall carbon nanotubes und/oder multiwall carbon nanotubes (MWCNT) Kohlenstoffnanotubes und/oder Kohlenstoffnanofasern (VGCF), bestehen. SWCNT sind Kohlenstoffnanofasern, die einen Außendurchmesser von 0,6 bis 2 nm, eine Faserlänge von 0,1 bis 50 µm und ein Längen/Dickenverhältnis größer 100 aufweisen. MWCNT oder Kohlenstoffnanofasern haben einen Außendurchmesser von 1 bis 1.000 nm, der Innendurchmesser beträgt 5 bis 100 nm, die Faserlänge kann zwischen 1 µm und 2.000 µm liegen und das Längen/Dickenverhältnis ist größer 10. Kohlenstoffnanotubes und/oder Kohlenstoffnanofasern können einzeln oder in Bündeln vorliegen.
Weiterhin wird vorgeschlagen, dass die Additivkomponente aus einem Weichmacher, umfassend Sulfonamide und/oder Polyether und/oder Metallsalz, besteht. Sulfonamid- und/oder Polyether-Weichmacher sind N-Butylbenzolsulfonamid und/oder N-Alkyltoluolsulfonamid und/oder N(2-Hydroxypropyl)benzolsulfonamid und/oder N,N'-Bisstearylethylendiamin und/oder 2-Hydroxyethylethylenharnstoff und/oder N-(2-(4-Methylbenzoyloxy)ethyl)benzolsulfonamid und/oder N(2-Hydroxy-1-hydroxymethyl-1-methyl)ethyl)benzolsulfonamid und/oder N(5-Hydroxypentyl)benzolsulfonamid) und/oder Laurylpoly(25)ethylenglycolmethacrylat und/oder Behenylpoly(25)ethylenglycolmethacrylat und/oder Polyethylenglycoldilaurat und/oder Polyoxypropylendiamin und/oder Polyoxyethylen-polyoxypropylendiamin und/oder Methoxy-polyoxyethylen-polyoxypropylenamin und/oder Bis(2-aminopropyl)polypropylenoxid und/oder Bis(2-aminopropyl)polyethylenoxid und/oder Polyoxypropylentriamin und/oder Polypropylenglycol und/oder Polytetramethylenglycol und/oder Polyethylenglycol.
Weiterhin wird vorgeschlagen, dass die Additivkomponente aus anorganischen und/oder organischen Treib- und Nukleierungsmitteln, umfassend Azo- und/oder Diazoverbindungen (Azodicarbonamide, ADC) und/oder Semicarbazide und/oder N-Nitrosoverbindungen (N,N'-Dinitrosopentamethylentetramin, DNPT) und/oder Sulfohydrazide (4,4'-Oxybis(benzolsulfohydrazid, OBSH) und/oder Azide und/oder Triazine und/oder Triazole und/oder Tetrazole (5-Phenyltetrazol, 5-PT) und/oder Semicarbazide (p-Toluolsolfonylsemicarbazid, TSS) und/oder Harnstoffderivate und/oder Guanidinderivate und/oder Ester und/oder Carbonate (Natriumbicarbonat) und/oder Hydrocarbonate und/oder Borhydrid / Wasser-Systeme und/oder organische Säuren/Bicarbonat-Systeme (Zitronensäure / Bicarbonat Treibsysteme) und/oder Zitronensäuresilikate und/oder Natriumborhydrid mit Wasserdonatoren und/oder Natriumbicarbonat, besteht.

In den nachfolgenden Ausführungsbeispielen wird eine Auswahl von einzelnen Rezepturkomponenten, nämlich von Abriebkomponenten, von Weich-/Rückschrumpfkomponenten und von Additivkomponenten aufgeführt und die sich daraus ergebenden Eigenschaften der jeweiligen wärmeschrumpfbaren Schutzschläuche nach Ihrer Elektronenstrahlvernetzung mit einer Dosis von 100 kGy hinsichtlich Abrieb bei 135°C und 150°C, sowie hinsichtlich des Rückschrumpfverhaltens.

Die Untersuchung des Rückschrumpfverhaltens erfolgte auf einem handelsüblichen Schrumpftunnel (Länge der beheizten Haube: 1,1 m, Durchlasshöhe 400 mm und Durchlassbreite 600 mm, Durchlaufgeschwindigkeit variabel einstellbar von 0,05 bis 1,1 m/min, Heizleistung 21 kW).
Das Rückschrumpfverhalten wurde an Schrumpfschläuchen durchgeführt, welche im unaufgeweiteten Zustand einen Innendurchmesser von ca. 13 mm und im aufgeweiteten Zustand einen Innendurchmesser von 38 mm aufweisen. Der aufgeweitete Schlauch wurde über einen Gummikrümmer (Außendurchmesser ca. 25 mm) gezogen und bei 240°C, 3 min geschrumpft, indem der Probekörper längs auf dem Transportband aufgelegt, durch die beheizte Schrumpfhaube gefahren wurde. Ein Rückschrumpfverhalten von 100 % ist erfolgreich bestanden, wenn der Schrumpfschlauch faltenfrei und blasenfrei sowie konturtreu auf dem zu umschrumpfenden Gummikrümmer anliegt und damit die Spezifikation erfüllt.

Zur Bestimmung des Abriebs wird der Schrumpfschlauch konzentrisch auf einen Metalldorn mit einem Durchmesser von 25 mm im Wärmeschrank (200°C, 15 min) aufgeschrumpft. Anschließend nimmt man den umschrumpften Dorn aus dem Wärmeschrank und kühlt ihn auf Raumtemperatur ab. Das Prüfmuster muss fest auf dem Dorn sitzen.
Der umschrumpfte Prüfkörper wird in eine Apparatur zur Bestimmung der Hubzahl so eingebaut, dass die Rille im Dorn nach unten zeigt. Die Aufnahme im Wärmeofen erfolgt 90° (senkrecht) zur Längsachse des Reibstabes, der mittig auf dem Prüfkörper platziert ist. Auf dem Reibstab wurde ein Zusatzgewicht von 400 g angebracht.
Der im Wärmeschrank befindliche Teil der Prüfapparatur sowie der Reibstab werden vor Testbeginn 60 min. bei +135°C vorgewärmt.

### Prüfbedingungen:

Reibstab ⌀: 4 mm (Rₐ ≈ 40 µm)
Hubfrequenz: 80 Doppelhübe pro min
Hublänge: 60 mm
Prüftemperatur: + 135°C ± 2°C oder + 150°C ± 2°C
Der Abrieb ist bestanden, wenn bei 135°C die Hubzahl ≧ 125.000 Doppelhübe und bei 150°C ≧ 90.000 beträgt.

Tabelle 1 zeigt einen Ausschnitt der Breite der erfindungsgemäßen Möglichkeiten für den einschichtigen wärmeschrumpfbaren Schutzschlauch.
Wie aus der Tabelle 1 erkennbar ist, zeigt sich eine verbesserte Abrieb- und Temperaturbeständigkeit sowie ein gutes Rückschrumpfverhalten. Diese Ausführungsbeispiele sind nicht beschränkend zu sehen.

**Tabelle 1.1**

| | 1 | 2 | 3 | 4 | 5 | 6 | 7 | 8 | 9 | 10 | 11 |
|---|---|---|---|---|---|---|---|---|---|---|---|
| **Abriebkomponente** | | | | | | | | | | | |
| PA6 | 29,126 | | | 29,126 | | 38,535 | | 37,434 | | | |
| PA 6/66 | | | 29,126 | | | | 37,106 | | | | |
| PA 12 | | 38,535 | | | | | | | | 29,126 | |
| PA MXD 6 | | | | | | | | | | | |
| PA 6/6T | | | | | | | | | | | |
| PA 6I/MACMI/MACMT | | | | | | | | | | | |
| PA6I/6T/MACMI | | | | | | | | | | | |
| PEBA | | | | | 33,681 | | | | 36,526 | | 38,535 |
| PA12/MACMI | | | | | | | | | | 19,117 | |
| HDPE | | | | | | | | | | | |
| COC | | | | | | | | | | | |

| **Weich-Rückschrumpfkomponente** | | | | | | | | | | | |
|---|---|---|---|---|---|---|---|---|---|---|---|
| PA 6/66/12 | 19,117 | 29,126 | | 48,544 | | | | | | | |
| PA 6/11 | | | 38,535 | | | 19,417 | | | | | |
| PA 6I/6T | 29,126 | | 9,709 | 19,117 | | | 24,938 | 24,658 | 24,051 | | |
| PEBA | | | | | | | | | | | |
| TPU | | | | | | | | | | | |
| LDPE | | | | | | 14,563 | | | | | |
| POE | | 19,417 | | | | | | | | | |
| EBA | | | | | 43,689 | | | | | | 29,126 |
| EVA | | | | | | | 12,469 | 12,479 | 12,175 | | |
| COC | | | | | | | | | | | |
| EPDM | | | | | | 14,563 | | | | | 9,709 |
| TPO | | | | | | | | | | 29,126 | |
| HDPE-g-MAH | | | | | | | | | | | |
| LLDPE-g-MAH | | | 19.417 | | | 9,709 | | | | | |
| POE-g-MAH | 19,417 | 9,709 | | | | | | | | 19,417 | |
| EBA-GMA | | | | | 19,417 | | | | | | 19.417 |
| EVA-g-MAH | | | | | | | 12,469 | | | | |
| EPDM-g-MAH | | | | | | | | | | | |
| E-AA-MAH | | | | | | | | 12,479 | | | |
| E-AA-GMA | | | | | | | | | 12,175 | | |

| **Additivkomponente** | | | | | | | | | | | |
|---|---|---|---|---|---|---|---|---|---|---|---|
| Vernetzer / Vernetzungsverstärker TAC TAIC TRIMM | 2,427 | 2,427 | 2,427 | 2,427 | 2,427 | 2,427 | 2,078 | 2,080 | 2,029 | 2,427 | 2,427 |
| Stabilisatoren | 0,787 | 0,786 | 0,786 | 0,786 | 0,786 | 0,786 | 0,716 | 0,716 | 0,706 | 0,787 | 0,786 |
| geruchs- / geschmackssensitve Stoffe Denatoniumbenzoat Capsaicin | | | | | | | 0,166 0,083 | 0,171 | 0,163 | | |
| Additive Abrieb- / Temperaturbeständigkeit PTFE exfolierter Graphit Montmorillonit Aerosil monodisperse Metalloxidnanopartikel nanoskalige Metalloxidfasern Kohlenstoffnanofasern | | | | | | | | | | | |
| Weichmacher Lithiumchlorid N-Alkyltoluolsulfonamid Polyoxyethylenpolyoxypropylendiamin | | | | | | | 9,975 | 9,983 | 4,058 8,117 | | |
| Strahlendosis [kGy] (elektronenstrahl-vernetzt) | 100 | 100 | 100 | 100 | 100 | 100 | 100 | 100 | 100 | 100 | 100 |

| **Eigenschaften** | | | | | | | | | | | |
|---|---|---|---|---|---|---|---|---|---|---|---|
| Rückschrumpfverhalten ⁽¹⁾ 240°C / 3 min | 100% | 100% | 100% | 100% | 100% | 100% | 100% | 100% | 100% | 100% | 100% |
| Abrieb ⁽²⁾ 135°C 150°C | > 125.000 > 90.000 | > 125.000 > 90.000 | > 125.000 > 90.000 | > 125.000 > 90.000 | > 125.000 > 90.000 | >125.000 > 90 000 | > 125.000 > 90 000 | > 125.000 > 90 000 | > 125.000 > 90.000 | > 125.000 > 90.000 | > 125.000 > 90.000 |

**Tabelle 1.2**

| | 12 | 13 | 14 | 15 | 16 | 17 | 18 | 19 | 20 | 21 | 22 |
|---|---|---|---|---|---|---|---|---|---|---|---|
| **Abriebkomponente** | | | | | | | | | | | |
| PA 6 | 28,037 | | | 27,523 | 28,037 | 28,302 | 9,223 | | | | |
| PA 6/66 | | | | | | | | | | | |
| PA 12 | | | | | 9,046 | | 19,048 | | | | |
| PA MXD 6 | | | | | | | | 28,832 | 28,832 | | |
| PA 6/6T | | | | | | | | | | 28,832 | 28,832 |
| PA 6I/MACMI/MACMT | | | | | | | | 28,832 | | 28,832 | |
| PA6I/6T/MACMI | | | | | | | | | | | 28,832 |
| PEBA | | | 36,064 | | | | | | | | |
| PA12/MACMI | | | | | | | | | | | |
| HDPE | 18,392 | | | | | | | | | | |
| COC | | 54,145 | | | | | | | | | |

| **Weich- / Rückschrumpfkomponente** | | | | | | | | | | | |
|---|---|---|---|---|---|---|---|---|---|---|---|
| PA 6/66/12 | | | | 13,461 | 14,019 | | 14,286 | 19,221 | 19,221 | 19,221 | 19,221 |
| PA 6/11 | | | | | | | | | | | |
| PA 6I/6T | 14,019 | | | | 14,019 | 28,302 | 14,286 | | 28,832 | | |
| PEBA | | | 18,180 | | | | | | | | |
| TPU | | | | | | 18,568 | | | | | |
| LDPE | | | | | | | | | | | |
| POE | | 36,364 | | | | | | | | | |
| EBA | | | | | | | | | | | |
| EVA | | | | | | | | | | | |
| COC | | | | 13,761 | | | | | | | |
| EPDM | | | | | | | | | | | |
| TPO | | | | | 18,692 | | | | | | |
| HDPE-g-MAH | 14,019 | | | | | | | | | | |
| LLDPE-g-MAH | | | 36,364 | 36,697 | | | 38,095 | | | | |
| POE-g-MAH | | | | | | 18,868 | | 19,221 | 19,221 | 19,221 | 19,221 |
| EBA-GMA | | | | | | | | | | | |
| EVA-g-MAH | | | | | | | | | | | |
| EPDM-g-MAH | 18,692 | | | | 9,346 | | | | | | |
| E-AA-MAH | | | | | | | | | | | |
| E-AA-GMA | | | | | | | | | | | |

| **Additivkomponente** | | | | | | | | | | | |
|---|---|---|---|---|---|---|---|---|---|---|---|
| Vemetzer / Vernetzungsverstärker TAC TAIC TRIMM | 2,336 | 2,273 | 2,273 | 2,294 | 2,336 | 2,358 | 2,381 | 3,123 | 3,123 | 3,123 | 3,123 |
| Stabilisatoren | 0,767 | 0,755 | 0,755 | 0,759 | 0,767 | 0,772 | 0,776 | 0,771 | 0,771 | 0,771 | 0,771 |
| geruchs- / geschmackssensitve Stoffe Denatoniumbenzoat Capsaicin | | | | | | | | | | | |
| Additive Abrieb- / Temperaturbeständigkeit | 3,738 | | | | | | | | | | |
| PTFE | | 6,364 | | | | | | | | | |
| exfolierter Graphit | | | 6,364 | | | | | | | | |
| Montmorillonit | | | | 5,505 | | | | | | | |
| Aerosil | | | | | 3,738 | | | | | | |
| monodisperse Metalloxidnanopartikel | | | | | | 2,830 | | | | | |
| nanoskalige Metalloxidfasern Kohlenstoffnanofasern | | | | | | | 1,905 | | | | |
| Weichmacher Lithiumchlorid N-Alkyltoluolsulfonamid Polyoxyethylenpolyoxypropylendiamin | | | | | | | | | | | |
| **Strahlendosis [kGy]** (elektronenstrahl-vernetzt) | 100 | 100 | 100 | 100 | 100 | 100 | 100 | 100 | 100 | 100 | 100 |

| **Eigenschaften** | | | | | | | | | | | |
|---|---|---|---|---|---|---|---|---|---|---|---|
| Rückschrumpfverhalten ⁽¹⁾ 240 °C / 3 min | 100 % | 100 % | 100 % | 100 % | 100 % | 100 % | 100 % | 100 % | 100 % | 100 % | 100 % |
| Abrieb ⁽²⁾ 135°C 150°C | > 125000 > 90 000 | > 125000 > 90.000 | > 125.000 > 90.000 | > 125.000 > 90 000 | > 125.000 > 90 000 | > 125000 > 90 000 | > 125.000 > 90 000 | > 125000 > 90 000 | > 125000 > 90.000 | > 125.000 > 90 000 | > 125000 > 90.000 |

Erfindungsgemäß wird neben dem einschichtigen wärmeschrumpfbaren Schutzschlauch mit verbesserter Abrieb-, Chemikalien- und Wärmeformbeständigkeit bei hohen Temperaturen auch ein wärmeschrumpfbarer Schutzschlauch mit einem mehrlagigen/-schichtigen Aufbau vorgeschlagen.

Der wärmeschrumpfbare Schutzschlauch mit einem zweilagigen/-schichtigen Aufbau besteht aus einer abriebfesten Außenschicht und einer flexiblen Innenschicht.
Dabei besteht die abriebfeste Außenschicht aus einer Mischzusammensetzung mit Anteilen von Polyamiden und/oder Polyetherblockamiden und/oder thermoplastischen Polyurethanen und/oder Polyolefinen und/oder Polymeren mit funktionellen Gruppen und Additiven.
Die abriebfeste Außenschicht kann aus einer Mischzusammensetzung mit Anteilen von Polyamiden und/oder Polyetherblockamiden und/oder thermoplastischen Polyurethanen und Additiven bestehen.
Weiterhin kann die abriebfeste Außenschicht aus einer Mischzusammensetzung mit Anteilen von Polyamiden und/oder Polyetherblockamiden und/oder thermoplastischen Polyurethanen und Polymeren mit funktionellen Gruppen und Additiven bestehen.
Ferner kann die abriebfeste Außenschicht aus einer Mischzusammensetzung mit Anteilen von Polyolefinen und Additiven bestehen.
Die abriebfeste Außenschicht kann auch aus einer Mischzusammensetzung mit Anteilen von Polyolefinen und Polymeren mit funktionellen Gruppen und Additiven bestehen.
Die flexible Innenschicht eines wärmeschrumpfbaren Schutzschlauches mit einem zweilagigen/-schichtigen Aufbau besteht aus einer Mischzusammensetzung mit Anteilen von Polyamiden und/oder Polyetherblockamiden und/oder thermoplastischen Polyurethanen und/oder Polyolefinen und/oder Polymeren mit funktionellen Gruppen und Additiven.
Weiterhin kann die flexible Innenschicht aus einer Mischzusammensetzung mit Anteilen von Polyamiden und/oder Polyetherblockamiden und/oder thermoplastischen Polyurethanen und Additiven bestehen.
Ferner kann die flexible Innenschicht aus einer Mischzusammensetzung mit Anteilen von Polyamiden und/oder Polyetherblockamiden und/oder thermoplastischen Polyurethanen und Polymeren mit funktionellen Gruppen und Additiven bestehen.

Die flexible Innenschicht kann auch aus einer Mischzusammensetzung mit Anteilen von Polyolefinen und Additiven bestehen.
Die flexible Innenschicht kann aber auch aus einer Mischzusammensetzung mit Anteilen von Polyolefinen und Polymeren mit funktionellen Gruppen und Additiven bestehen.
Das Schichtdickenverhältnis der Wandstärke der Außenschicht zur Wandstärke der Innenschicht des wärmeschrumpfbaren Schutzschlauches mit einem zweilagigen/-schichtigen Aufbau beträgt erfindungsgemäß maximal eins zu eins.

Tabelle 2 zeigt einen Ausschnitt der Breite der erfindungsgemäßen Möglichkeiten für den wärmeschrumpfbaren Schutzschlauch mit einem zweilagigen/-schichtigen Aufbau. Wie aus der Tabelle 2 erkennbar ist, zeigt sich eine verbesserte Abrieb- und Temperaturbeständigkeit sowie ein gutes Rückschrumpfverhalten. Diese Ausführungsbeispiele sind nicht beschränkend zu sehen.

**Tabelle 2.1**

| | 1 | | 2 | | 3 | | 4 | | 5 | |
|---|---|---|---|---|---|---|---|---|---|---|
| | I | A | I | A | I | A | I | A | I | A |
| **Abriebkomponente** | | | | | | | | | | |
| PA 6 | | 29,126 | | 30,675 | | | | | | |
| PA 6/66 | | | | | | | | | | |
| PA 12 | | | | | | 50,000 | | 56,600 | | 59,167 |
| PEBA | | | | | | 37,300 | | 37,300 | | |
| PA12/MACMI | | | | | | | | | | 18,924 |
| HDPE | | | | | | | | | | |
| COC | | | | | | | | | | |

| **Welch- / Rückschrumpfkomponente** | | | | | | | | | | |
|---|---|---|---|---|---|---|---|---|---|---|
| PA 6/66/12 | | 19,417 | | 17,528 | | | | | 27,000 | |
| PA 6/11 | | | | | | | | | | |
| PA 6I/6T | | 29,128 | | 26,293 | | | | | 15,000 | |
| PEBA | | | | | | | | | | |
| TPU | | | | | | | 95,245 | | | |
| LDPE | | | 79,800 | | 74,400 | | | | | |
| POE | | | | | | | | | 15,000 | |
| EBA | | | | | | | | | | |
| EVA | 97,800 | | 18,000 | | | | | | | |
| COC | | | | | | | | | | |
| EPDM | | | | | | | | | | |
| TPO | | | | | | | | | | |
| HDPE-g-MAH | | | | | | | | | | |
| LLDPE-g-MAH | | | | | 20,400 | | | | | |
| POE-g-MAH | | 19,417 | | 17,526 | | | | | 35,000 | 14,381 |
| EBA-GMA | | | | | | | | | | |
| EVA-g-MAH | | | | | | | | | | |
| EPDM-g-MAH | | | | | | | | | | |
| E-AA-MAH | | | | | | | | | | |
| E-AA-GMA | | | | | | | | | | |

| **Additivkomponente** | | | | | | | | | | |
|---|---|---|---|---|---|---|---|---|---|---|
| Vernetzer / Vernetzungsverstärker | | | | | | | | | | |
| TAC | 1,000 | 2,427 | | | | | 2,080 | 2,000 | | |
| TAIC | | | 1,000 | 2,191 | | | | | 1,950 | 2,427 |
| TRIMM | | | | | 1,500 | 2,000 | | | | |
| Stabilisatoren | 1,200 | 0,486 | 1,200 | 0,701 | 1,200 | 0,700 | 1,137 | 0,700 | 1,050 | 0,673 |
| geruchs- / geschmackssensitve Stoffe | | | | | | | | | | |
| Denatoniumbenzoat | | | | **0,175** | | | | | | |
| Capsaicin | | | | **0,088** | | | | | | |
| Additive Abrieb- / Temperaturbeständigkeit | | | | | | | | | | |
| PTFE | | | | | | | | | | |
| exfolierter Graphit | | | | 4,821 | | | 3,200 | 5,000 | | |
| Montmorillonit | | | | | 2,500 | | | | | |
| Aerosil | | | | | | | | | | |
| monodisperse Metalloxidnanopartikel | | | | | | | | | | |
| nanoskalige Metalloxidfasern | | | | | | | | | | |
| Kohlenstoffnanofasern / Nanotubes | | | | | | | | | | |
| Weichmacher | | | | | | | | | | |
| Lithiumchlorid | | | | | | | | | | |
| N-Alkyltoluolsulfonamid | | | | | | | | | | 5,058 |
| Polyoxyethylenpolyoxypropylendiamin | | | | | | | | | | |
| Treib- und Nukleierungsmittel Zitronensäure/Bicarbonat | | | | | | | 1,538 | | | |
| **Strahlendosis [kGy]** (elektronenstrahl-vernetzt) | 100 | 100 | 100 | 100 | 100 | 100 | 100 | 100 | 100 | 100 |

| **Eigenschalten** | | | | | | | | | | |
|---|---|---|---|---|---|---|---|---|---|---|
| Rückschrumpfverhalten ⁽¹⁾ | 100 % | 100 % | 100 % | 100 % | 100 % | 100 % | 100 % | 100 % | 100 % | 100 % |
| 240 °C / 3 min | | | | | | | | | | |
| Antrieb ⁽²⁾ | | | | | | | | | | |
| 135 °C | > 125.000 | >125.000 | > 125.000 | > 125.000 | > 125.000 | > 125.000 | > 125.000 | > 125.000 | > 125.000 | > 125.000 |
| 150 °C | > 90.000 | > 90.000 | > 90.000 | > 90.000 | > 90.000 | > 90.000 | > 90.000 | > 90.000 | > 90.000 | > 90.000 |

**Tabelle 2.2**

| | 6 | | 7 | | 8 | | 9 | | 10 | |
|---|---|---|---|---|---|---|---|---|---|---|
| | I | A | I | A | I | A | I | A | I | A |
| **Abriebkomponente** | | | | | | | | | | |
| PA 6 | | | | | 11,508 | | | 29,088 | | |
| PA 6/66 | | 58,387 | | | | 55,270 | | | | |
| PA 12 | | | | | | | | | | |
| PEBA | | | | | | | | | | |
| PA12/MACMI | | | | | | | | | | |
| HDPE | | | | | | 13,173 | | | | |
| COC | | | | 85,000 | | | | | | |

| **Welch- / Rückschrumpfkomponente** | | | | | | | | | | |
|---|---|---|---|---|---|---|---|---|---|---|
| PA 6/66/12 | | 20,311 | | | | | | 17,391 | | |
| PA 6/11 | | | | | | | | | 17,637 | |
| PA 6I/6T | | | | | | | | 17,391 | | |
| PEBA | | | | | | | | | | 16,888 |
| TPU | | | | | | | 30,612 | | | |
| LDPE | | | 49,447 | | 44,602 | | | | | |
| POE | | | 18,560 | 12,700 | | | | | | |
| EBA | | | | | | | | | 52,910 | |
| EVA | 77,800 | | | | | | 51,020 | | | |
| COC | | | 25,513 | | | | | | | |
| EPDM | | | | | 14,056 | | | | | |
| TPO | | | | | | | | | | |
| HDPE-g-MAH | | | | | | 23,101 | | | | |
| LLDPE-g-MAH | | | | | | | | | | |
| POE-g-MAH | | | | | | | | | | |
| EBA-GMA | | | | | | | | | 17,637 | |
| EVA-g-MAH | 20,000 | 14,752 | | | | | 15,306 | | | |
| EPDM-g-MAH | | | | | 23,165 | | | 17,391 | | |
| E-AA-MAH | | | | | | | | | | |
| E-AA-GMA | | | | | | | | | | |

| **Additivkomponente** | | | | | | | | | | |
|---|---|---|---|---|---|---|---|---|---|---|
| Vernetzer / Vernetzungsverstärker | | | 1,000 | 1,500 | | | | | 1,763 | 1,887 |
| TAC | | | | | 2,294 | 2,336 | | | | |
| TAIC | 1,000 | 2,336 | | | | | 2,041 | 1,739 | | |
| TRIMM | | | | | | | | | | |
| Stabilisatoren | 1,200 | 0,467 | 1,200 | 0,800 | 0,934 | 0,820 | 1,011 | 0,870 | 0,970 | 0,700 |
| geruchs- / geschmackssensitve | | | | | | | | | 0,132 | 0,142 |
| Stoffe | | | | | | | | | 0,132 | 0,142 |
| Denatoniumbenzoat | | | | | | | | | | |
| Capsaicin | | | | | | | | | | |
| Additive Abrieb- / Temperaturbeständigkeit | | 3,738 | | | | | | | | 2,829 |
| PTFE | | | 4,280 | | | | | | | |
| exfolierter Graphit Montmorillonit | | | | | | 5,300 | | | | |
| Aerosil | | | | | 3,441 | | | | | |
| monodisperse Metalloxidnanopartikel | | | | | | | | 1,739 | | |
| nanoskalige Metalloxidfasern | | | | | | | | | | |
| Kohlenstoffnanofasern / Nanotubes | | | | | | | | | | |
| Weichmacher | | | | | | | | | | |
| Lithiumchlorid | | | | | | | | | | |
| N-Alkyltoluolsulfonamid | | | | | | | | | | |
| Polyoxyethylenpolyoxypropylendiamin | | | | | | | | | 8,819 | |
| Treib- und Nukleierungsmittel Zitronensäure/Bicarbonat | | | | | | | | | | |
| **Strahlendosis [kGy]** (elektronenstrahl-vernetzt) | 100 | 100 | 100 | 100 | 100 | 100 | 100 | 100 | 100 | 100 |
| Rückschrumpfverhalten ⁽¹⁾ | 100 % | 100 % | 100 % | 100 % | 100 % | 100 % | 100 % | 100 % | 100 % | 100 % |
| 240 °C / 3 min | | | | | | | | | | |

**Tabelle 2.3**

| | 11 | | 12 | | 13 | | 14 | | 15 | |
|---|---|---|---|---|---|---|---|---|---|---|
| | I | A | I | A | I | A | I | A | I | A |
| | 11 | | 12 | | 13 | | 14 | | 15 | |
| | I | A | I | A | I | A | I | A | I | A |
| **Abriebkomponente** | | | | | | | | | | |
| PA 6 | | 37,736 | | 28,090 | | | | | | |
| PA 6/66 | | | | | | | | | | |
| PA 12 | | | | | | | | | 14,535 | |
| PEBA | | | | | | | | | | |
| PA12/MACMI | | | | | | | | | | |
| HDPE | 14,191 | 28,302 | | | | | | | | |
| COC | | | | | | 66,038 | | | | |

| **Weich-/Rückschrumpfkomponents** | | | | | | | | | | |
|---|---|---|---|---|---|---|---|---|---|---|
| PA 6/66/12 | | | | 28,090 | | | | | | |
| PA 6/11 | | 18,868 | | | | | | | | |
| PA 6I/6T | | | | 28,090 | | | | | | |
| PEBA | | | | | | | 77,670 | 18,854 | | |
| TPU | | | | | | | | | | |
| LDPE | | | | | | | | | 53,295 | |
| POE | | | | | | | | | | |
| EBA | | | | | | | | | | 30,681 |
| EVA | 56,764 | | | | | | | | | |
| COC | | | | | | 18,868 | | | | |
| EPDM | | | | | | 9,433 | | | 19,380 | |
| TPO | | | 96,800 | | 95,800 | | | | | |
| HDPE-g-MAH | 9,461 | 9,434 | | | | | | | 9,690 | |
| LLDPE-g-MAH | | | | | | | | | | |
| POE-g-MAH | | | | | | | | | | |
| EBA-GMA | | | | | | | | | | 19,417 |
| EVA-g-MAH | 14,191 | | | | | | | | | |
| EPDM-g-MAH | | | | 9,363 | | | | | | |
| E-AA-MAH | | | | | | | | | | |
| E-AA-GMA | | | | | | | | | | |

| **Additivkomponente** | | | | | | | | | | |
|---|---|---|---|---|---|---|---|---|---|---|
| Vernetzer/Vernetzungsverstärker | | | | | 2,000 | | | | | |
| TAC | 1,419 | 1,887 | | | | 1,887 | 1,942 | 1,885 | 1,938 | 2,427 |
| TAIC | | | 2,000 | 1,873 | | | | | | |
| TRIMM | | | | | | | | | | |
| Stabilisatoren | 1,135 | 0,943 | 1,200 | 0,749 | 1,200 | 0,943 | 0,971 | 0,943 | 1,162 | 0,766 |
| geruchs-/geschmackssensive | | | | | | | | | | |
| Stoffe | | | | | | | | 0,057 | | |
| Denaton/umbenzoat | | | | | | | | 0,019 | | |
| Capsaicin | | | | | | | | | | |
| Additive Abrieb-/TempersturbesTändigkeit | | | | | | | | | | |
| PTFE | | | | | | 2,631 | | | | |
| extollerter Graphit | | 2,630 | | | | | | | | 3,000 |
| Montmorillonit | | | | 3,745 | | | | | | |
| Aerosil | | | | | | | | 2,828 | | |
| monodisperse Metalloxidnanopartikel | 2,839 | | | | | | | | | |
| nanoskalige Metalloxidfasern Kohlenstoffnanofasern | | | | | | | | | | |
| Weichmacher | | | | | | | | | | |
| Lithiumchlorid | | | | | | | | | | |
| N-Alkyltoluolsulfoamid | | | | | | | | | | |
| Polyoxyethylenpolyoxypropylendiamin | | | | | | | | | | |
| Treib- und Nukeierungsmittel Zitronensäure/Bicarbonat | | | | | 1,000 | | | | | |
| Strahlendosis [kGy] (elektronenstrahl-vernetzt) | 100 | 100 | 100 | 100 | 100 | 100 | 100 | 100 | 100 | 100 |

| **Elgenschaften** | | | | | | | | | | |
|---|---|---|---|---|---|---|---|---|---|---|
| Rückschrumpf⁽¹⁾ 240 °C/3 min | 100 % | 100 % | 100 % | 100 % | 100 % | 100 % | 100 % | 100 % | 100 % | 100 % |
| Abrieb ⁽²⁾ | | | | | | | | | | |
| 135 °C | > 125.000 | > 125.000 | > 125.000 | > 125.000 | > 125.000 | > 125.000 | > 125.000 | > 125.000 | > 125.000 | > 125.000 |
| 150 °C | > 90.000 | > 90.000 | > 90.000 | > 90.000 | > 90.000 | > 90.000 | > 90.000 | > 90.000 | > 90.000 | > 90.000 |

Erfindungsgemäß wird neben dem wärmeschrumpfbaren Schutzschlauch mit einlagigem/-schichtigem und zweilagigem/-schichtigem Aufbau ein wärmeschrumpfbare Schutzschlauch mit einem dreilagigen/-schichtigen Aufbau, bestehend aus einer abriebfesten Außenschicht, einer Zwischenschicht und einer flexiblen Innenschicht, vorgeschlagen.
Dabei besteht die abriebfeste Außenschicht aus einer Mischzusammensetzung mit Anteilen von Polyamiden und/oder Polyetherblockamiden und/oder thermoplastischen Polyurethanen und/oder Polyolefinen und/oder Polymeren mit funktionellen Gruppen und Additiven.
Die abriebfeste Außenschicht kann aus einer Mischzusammensetzung mit Anteilen von Polyamiden und/oder Polyetherblockamiden und/oder thermoplastischen Polyurethanen und Additiven bestehen.
Weiterhin kann die abriebfeste Außenschicht aus einer Mischzusammensetzung mit Anteilen von Polyamiden und/oder Polyetherblockamiden und/oder thermoplastischen Polyurethanen und Polymeren mit funktionellen Gruppen und Additiven bestehen.
Ferner kann die abriebfeste Außenschicht aus einer Mischzusammensetzung mit Anteilen von Polyolefinen und Additiven bestehen.
Die abriebfeste Außenschicht kann auch aus einer Mischzusammensetzung mit Anteilen von Polyolefinen und Polymeren mit funktionellen Gruppen und Additiven bestehen.
Die Zwischenschicht eines wärmeschrumpfbaren Schutzschlauches mit einem dreilagigen/-schichtigen Aufbau besteht aus einer Mischzusammensetzung mit Anteilen von Polyamiden und/oder Polyetherblockamiden und/oder thermoplastischen Polyurethanen und/oder Polyolefinen und/oder Polymeren mit funktionellen Gruppen und Additiven.
Weiterhin kann die Zwischenschicht aus einer Mischzusammensetzung mit Anteilen von Polyamiden und/oder Polyetherblockamiden und/oder thermoplastischen Polyurethanen und Additiven bestehen.
Ferner kann die Zwischenschicht eines wärmeschrumpfbaren Schutzschlauches mit einem dreilagigen/-schichtigen Aufbau aus einer Mischzusammensetzung mit Anteilen von Polyamiden und/oder Polyetherblockamiden und/oder thermoplastischen Polyurethanen und Polymeren mit funktionellen Gruppen und Additiven bestehen.
Die Zwischenschicht kann auch aus einer Mischzusammensetzung mit Anteilen von Polyolefinen und Additiven bestehen.
Ferner kann die Zwischenschicht aus einer Mischzusammensetzung mit Anteilen von Polyolefinen und Polymeren mit funktionellen Gruppen und Additiven bestehen.
Die Zwischenschicht kann aber auch aus einer Mischzusammensetzung mit Anteilen von Polymeren mit funktionellen Gruppen und Additiven bestehen.
Die flexible Innenschicht eines wärmeschrumpfbaren Schutzschlauches mit einem dreilagigen/-schichtigen Aufbau besteht aus einer Mischzusammensetzung mit Anteilen von Polyamiden und/oder Polyetherblockamiden und/oder thermoplastischen Polyurethanen und/oder Polyolefinen und/oder Polymeren mit funktionellen Gruppen und Additiven.
Weiterhin kann die flexible Innenschicht aus einer Mischzusammensetzung mit Anteilen von Polyamiden und/oder Polyetherblockamiden und/oder thermoplastischen Polyurethanen und Additiven bestehen.
Ferner kann die flexible Innenschicht aus einer Mischzusammensetzung mit Anteilen von Polyamiden und/oder Polyetherblockamiden und/oder thermoplastischen Polyurethanen und Polymeren mit funktionellen Gruppen und Additiven bestehen.
Die flexible Innenschicht kann auch aus einer Mischzusammensetzung mit Anteilen von Polyolefinen und Additiven bestehen.
Die flexible Innenschicht kann aber auch aus einer Mischzusammensetzung mit Anteilen von Polyolefinen und Polymeren mit funktionellen Gruppen und Additiven bestehen.
Weiterhin kann die flexible Innenschicht aus einer Mischzusammensetzung mit Anteilen von Polymeren mit funktionellen Gruppen und Additiven bestehen.
Das Schichtdickenverhältnis der Wandstärke der Außenschicht zur Wandstärke der Innenschicht des wärmeschrumpfbaren Schutzschlauches mit einem dreilagigen/-schichtigen Aufbau beträgt erfindungsgemäß maximal eins zu eins.
Das Schichtdickenverhältnis der Wandstärke der Außenschicht zur Wandstärke der Zwischenschicht beträgt erfindungsgemäß maximal zehn zu eins.

Tabelle 3 zeigt einen Ausschnitt der Breite der erfindungsgemäßen Möglichkeiten für den wärmeschrumpfbaren Schutzschlauch mit einem dreilagigen/-schichtigen Aufbau. Wie aus der Tabelle 3 erkennbar ist, zeigt sich eine verbesserte Abrieb- und Temperaturbeständigkeit sowie ein gutes Rückschrumpfverhalten. Diese Ausführungsbeispiele sind nicht beschränkend zu sehen.

**Tabelle 3.1**

| | 1 | | | 2 | | | 3 | | | 4 | | |
|---|---|---|---|---|---|---|---|---|---|---|---|---|
| | I | Z | A | I | Z | A | I | Z | A | I | Z | A |
| **Abriebkomponente** | | | | | | | | | | | | |
| PA 6 | | | 29,126 | | | 31,088 | | 15,000 | 40,000 | | | |
| PA 6/66 | | | | | | | | | | | | |
| PA 12 | | | | | | 17,391 | | | | | | |
| PEBA | | | | | | | | | | | | |
| PA12/MACMI | | | | | | | | | | | | |
| HDPE | | | | | | | | | | | | |
| COC | | | | | | | | | | | 29,000 | 74,000 |

| **Welch- / Rückschrumpfkomponente** | | | | | | | | | | | | |
|---|---|---|---|---|---|---|---|---|---|---|---|---|
| PA 6/66/12 | | | 19,117 | | 30,000 | 22,782 | | | | | | |
| PA 6/11 | | | | | | | | 25,000 | | | | |
| PA 6I/6T | | | 29,126 | | | 23,391 | | | 56,700 | | | |
| PEBA | | | | | | | | | | | | |
| TPU | | | | | | | | | | | | |
| LDPE | | | | | | | | | | 60,000 | | |
| POE | | | | | | | | | | | | |
| EBA | | | | | | | | | | | | |
| EVA | 97,800 | | | | | | 96,900 | | | | | |
| COC | | | | | | | | | | 20,000 | 48,000 | 20,000 |
| EPDM | | | | | | | | | | 26,000 | 18,000 | |
| TPO | | | | 95,300 | | | | | | | | |
| HDPE-g-MAH | | | | | | | | | | | | |
| LLDPE-g-MAH | | | | | | | | | | | | |
| POE-g-MAH | | 98,700 | 19,417 | | 67,000 | | | | | | | |
| EBA-GMA | | | | | | | | | | | | |
| EVA-g-MAH | | | | | | | | 51,800 | | | | |
| EPDM-g-MAH | | | | | | | | | | | | |
| E-AA-MAH | | | | | | | | | | | | |
| E-AA-GMA | | | | | | | | | | | | |

| **Additivkomponente** | | | | | | | | | | | | |
|---|---|---|---|---|---|---|---|---|---|---|---|---|
| Vernetzer / Vernetzungsverstärker TAC TAIC TRIMM | 1,000 | 0,500 | 2,427 | 2,000 | 2,000 | 1,739 | 2,000 | 2,000 | 2,000 | 2,000 | 2,000 | 2,000 |
| Stabilisatoren | 1,200 | 0,800 | 0,786 | 1,200 | 1,000 | 0,870 | 1,000 | 1,000 | 1,000 | 1,000 | 1,000 | 1,000 |
| geruchs- / geschmackssensitve Stoffe Denatoniumbenzoat Capsaicin | | | | | | | 0,050 | 0,100 | 0,150 | | | |
| Additive Abrieb- / Temperaturbeständigkeit | | | | | | | | | | | | |
| PTFE | | | | | | | | | | | | |
| exfolierter Graphit Montmorillonit | | | | | | | | | | 1,000 | 2,000 | 3,000 |
| Aerosil | | | | | | | | | | | | |
| monodisperse Metalloxidnanopartikel | | | | | | | | | | | | |
| nanoskalige Metalloxidfasern | | | | | | | | | | | | |
| Kohlenstoffnanofasern / Nanotubes | | | | | | 2,739 | | | | | | |
| Weichmacher Lithiumchlorid N-Alkyltoluolsulfonamid Polyoxyethylenpolyoxypropylendiamin | | | | | | | | 5,000 | | | | |
| Treib- und Nukleierungsmittel Zitronensäure/Bicarbonat | | | | 1,500 | | | | | | | | |
| Strahlendosis [kGy] (elektronenstrahl-vernetzt) | 100 | 100 | 100 | 100 | 100 | 100 | 100 | 100 | 100 | 100 | 100 | 100 |

| **Eigenschaften** | | | | | | | | | | | | |
|---|---|---|---|---|---|---|---|---|---|---|---|---|
| Rückschrumpfverhalten ⁽¹⁾ | | | | | | | | | | | | |
| 240 °C / 3 min | 100% | 100% | 100% | 100% | 100% | 100% | 100% | 100% | 100% | 100% | 100% | 100% |
| Abrieb⁽²⁾ | | | | | | | | | | | | |
| 135 °C | > 125 000 | > 125 000 | > 125 000 | > 125.000 | > 125 000 | > 125 000 | > 125.000 | > 125 000 | > 125.000 | > 125.000 | > 125 000 | > 125 000 |
| 150 °C | > 90 000 | > 90.000 | > 90 000 | > 90.000 | > 90 000 | > 90.000 | > 90.000 | > 90.000 | > 90.000 | > 90.000 | > 90.000 | > 90.000 |

**Tabelle 3.2**

| | 5 | | | 6 | | | 7 | | | 8 | | |
|---|---|---|---|---|---|---|---|---|---|---|---|---|
| | I | Z | A | I | Z | A | I | Z | A | I | Z | A |
| **Abriebkomponente** | | | | | | | | | | | | |
| PA 6 | | | | | | 50,000 | | | 45,000 | | | |
| PA 6/66 | | | | | | | | | | | | |
| PA 12 | | | 60,000 | | | | | | | | | |
| PEBA | | 33,700 | 33,700 | | | | | | | | 60,000 | 94,000 |
| PA12/MACMI | | | | | | | | | | | | |
| HDPE | | | | | | | | | 30,000 | | | |
| COC | | | | | | | | | | | | |

| **Weich- / Rückschrumpfkomponente** | | | | | | | | | | | | |
|---|---|---|---|---|---|---|---|---|---|---|---|---|
| PA 6/66/12 | | | | | | 25,000 | | | | | | |
| PA 6/11 | | | | | | | | | | | | |
| PA 6I/6T | | | | | | | | | | | | |
| PEBA | | | | | | | | | | 96,000 | 35,000 | |
| TPU | 97,000 | 60,000 | | | | | | | | | | |
| LDPE | | | | 39,000 | | | 97,000 | | | | | |
| POE | | | | 29,000 | | | | | | | | |
| EBA | | | | 29,000 | | | | | | | | |
| EVA | | | | | | | | | | | | |
| COC | | | | | | | | | | | | |
| EPDM | | | | | | | | | | | | |
| TPO | | | | | | | | | | | | |

| **Polymere mit funktionellen Gruppen** | | | | | | | | | | | | |
|---|---|---|---|---|---|---|---|---|---|---|---|---|
| HDPE-g-MAH | | | | | | | | | 18,200 | | | |
| LLDPE-g-MAH | | | | | | | | 97,000 | | | | |
| POE-g-MAH | | | | | | | | | | | | |
| EBA-GMA | | | | | 95,000 | 19,000 | | | | | | |
| EVA-g-MAH | | | | | | | | | | | | |
| EPDM-g-MAH | | | | | | | | | | | | |
| E-AA-MAH | | | | | | | | | | | | |
| E-AA-GMA | | | | | | | | | | | | |

| **Additivkomponente** | | | | | | | | | | | | |
|---|---|---|---|---|---|---|---|---|---|---|---|---|
| Vernetzer / Vernetzungsverstärker TAC TAIC TRIMM | 2,000 | 2,000 | 2,000 | 2,000 | 2,000 | 2,000 | 2,000 | 2,000 | 2,000 | 2,000 | 2,000 | 2,000 |
| Stabilisatoren | 1,000 | 1,000 | 1,000 | 1,000 | 1,000 | 1,000 | 1,000 | 1,000 | 0,600 | 1,000 | 1,000 | 1,000 |
| geruchs- geschmackssensitve Stoffe Denatoniumbenzoat Capsaicin | 0,150 | 0,150 | 0,150 | | | | | | | | | |
| Additive Abrieb- / Temperaturbeständigkeit PTFE exfolierter Graphit Montmorillonit Aerosil monodisperse Metalloxidnanopartikel nanoskalige Metalloxidfasern Kohlenstoffnanofasern / Nanotubes | | 3,000 | 3,000 | | 2,000 | 4,000 | | | 4,000 | 1,000 | 2,000 | 3,000 |
| Weichmacher Lithiumchlorid N-Alkyltoluolsulfonamid Polyoxyethylenpolyoxypropylendiamin | | | | | | 1,000 | | | | | | |
| Treib- und Nukleierungsmittel Zitronensäure/Bicarbonat | | | | | | | | | | | | |
| Strahlendosis [kGy] (elektronenstrahl-vernetzt) | 100 | 100 | 100 | 100 | 100 | 100 | 100 | 100 | 100 | 100 | 100 | 100 |

| **Eigenschaften** | | | | | | | | | | | | |
|---|---|---|---|---|---|---|---|---|---|---|---|---|
| Rückschrumpfverhalten ⁽¹⁾ | 100 % | 100 % | 100 % | 100 % | 100 % | 100 % | 100 % | 100 % | 100 % | 100 % | 100 % | 100 % |
| 240 °C / 3 min | | | | | | | | | | | | |
| Abrieb ⁽²⁾ | | | | | | | | | | | | |
| 135°C | > 125.000 | > 125.000 | > 125.000 | > 125.000 | > 125.000 | > 125.000 | > 125.000 | > 125000 | > 125.000 | > 125.000 | > 125.000 | > 125.000 |
| 150 °C | > 90.000 | > 90.000 | > 90.000 | > 90.000 | > 90.000 | > 90 000 | > 90.000 | > 90.000 | > 90.000 | > 90.000 | > 90.000 | > 90.000 |

**Tabelle 3.3**

| | 9 | | | 10 | | | | | | | | |
|---|---|---|---|---|---|---|---|---|---|---|---|---|
| | I | Z | A | I | Z | A | I | Z | A | I | Z | A |
| **Abriebkomponente** | | | | | | | | | | | | |
| PA 6 | | | | | | | | | | | | |
| PA 6/66 | | 20,000 | 45,000 | | | | | | | | | |
| PA 12 | 30,000 | 15,000 | | | 20,000 | 59,167 | | | | | | |
| PEBA | | | | | | | | | | | | |
| PA12/MACMI | | | | | | 33,733 | | | | | | |
| HDPE | | | | 20,000 | | | | | | | | |
| COC | | | | | | | | | | | | |

| **Weich- 1 Rückschrumpfkomponente** | | | | | | | | | | | | |
|---|---|---|---|---|---|---|---|---|---|---|---|---|
| PA 6/66/12 | | 22,000 | 20,000 | | 28,000 | | | | | | | |
| PA 6/11 | | | | | | | | | | | | |
| PA 6I/6T | | 25,000 | 28,000 | | | | | | | | | |
| PEBA | | | | | | | | | | | | |
| TPU | | | | | | | | | | | | |
| LDPE | | | | 65,000 | | | | | | | | |
| POE | 65,000 | | | | | | | | | | | |
| EBA | | | | | | | | | | | | |
| EVA | | | | | | | | | | | | |
| COC | | | | | | | | | | | | |
| EPDM | | | | 15,000 | | | | | | | | |
| TPO | | | | | | | | | | | | |

| **Polymere mit funktionellen Grupen** | | | | | | | | | | | | |
|---|---|---|---|---|---|---|---|---|---|---|---|---|
| HDPE-g-MAH | | | | | | | | | | | | |
| LLDPE-g-MAH | | | | | | | | | | | | |
| POE-g-MAH | | 12,000 | | | 46,400 | | | | | | | |
| EBA-GMA | | | | | | | | | | | | |
| EVA-g-MAH | | | | | | | | | | | | |
| EPDM-g-MAH | | | | | | | | | | | | |
| E-AA-MAH | | | | | | | | | | | | |
| E-AA-GMA | | | | | | | | | | | | |

| **Additivkomponente** | | | | | | | | | | | | |
|---|---|---|---|---|---|---|---|---|---|---|---|---|
| Vernetzer / Vernetzungsverstärker TAC TAIC TRIMM | 2,000 | 2,000 | 2,000 | 2,000 | 1,500 | 2,427 | | | | | | |
| Stabilisatoren | 1,000 | 1,000 | 1,000 | 1,000 | 1,100 | 0,673 | | | | | | |
| geruchs- / geschmackssensitve Stoffe Denatoniumbenzoat Capsaicin | | | | | | | | | | | | |
| Additive Abrieb- / Temperaturbeständigkeit | | | | | | | | | | | | |
| PTFE | 2,000 | 3,000 | 4,000 | | 3,000 | 4,000 | | | | | | |
| exfolierter Graphit Montmorillonit Aerosil monodisperse Metalloxidnanopartikel nanoskalige Metalloxidfasern Kohlenstoffnanofasern | | | | 2,000 | | | | | | | | |
| Weichmacher Lithiumchlorid N-Alkyltoluolsulfonamid Polyoxyethylenpolyoxypropylendiamin | | | | | | | | | | | | |
| Treib- und Nukleierungsmittel Zitronensäure/Bicarbonat | 1,000 | | | | | | | | | | | |
| **Strahlendosis [kGy]** (elektronenstrahl-vernetzt) | 100 | 100 | 100 | 100 | 100 | 100 | | | | | | |

| **Eigenschaften** | | | | | | | | | | | | |
|---|---|---|---|---|---|---|---|---|---|---|---|---|
| Rückschrumpf ⁽¹⁾ 240°C /3 min | 100 % | 100 % | 100 % | 100 % | 100 % | 100 % | | | | | | |
| Abrieb⁽²⁾ | | | | | | | | | | | | |
| 135 °C | > 125.000 | > 125 000 | > 125 000 | > 125.000 | > 125.000 | > 125.000 | | | | | | |
| 150°C | > 90.000 | > 90.000 | > 90.000 | > 90.000 | > 90.000 | > 90.000 | | | | | | |

In einer Weiterbildung der Erfindung können die beschriebenen Schichten als Gradientenschichten ausgebildet werden.
Der wärmeschrumpfbare Schutzschlauch kann als abriebfeste Außenschicht eine Gradientenaußenschicht haben, in welcher die Einzelkomponenten einen stufenartigen und/oder kontinuierlichen Konzentrationsgradienten besitzen.
Der wärmeschrumpfbare Schutzschlauch kann als Zwischenschicht eine Gradientenzwischenschicht haben, in welcher die Einzelkomponenten einen stufenartigen und/oder kontinuierlichen Konzentrationsgradienten besitzen.
Der wärmeschrumpfbare Schutzschlauch kann als flexible Innenschicht eine Gradienteninnenschicht haben, in welcher die Einzelkomponenten einen stufenartigen und/oder kontinuierlichen Konzentrationsgradienten besitzen.

Erfindungsgemäß sind die Schichtdicken der einzelnen Gradientenschichten gleich und/oder ungleich.
Vorzugsweise nimmt in der abriebfesten Gradientenaußenschicht und/oder Gradientenzwischenschicht und/oder Gradienteninnenschicht die Konzentration der Abriebkomponenten vom Außenradius zum Innenradius ab.
Weiterhin nimmt in der abriebfesten Gradientenaußenschicht und/oder Gradientenzwischenschicht und/oder Gradienteninnenschicht die Konzentration der geruchsund/oder geschmackssensitiven Stoffe vom Außenradius zum Innenradius ab.
Ferner nimmt in der abriebfesten Gradientenaußenschicht und/oder Gradientenzwischenschicht und/oder Gradienteninnenschicht die Konzentration der Weich- und/oder Rückschrumpfkomponenten vom Außenradius zum Innenradius zu.
Weiterhin wird der wärmeschrumpfbare Schutzschlauch in einem Extrusionsund/oder Koextrusionsverfahren hergestellt.
Der so ausgeführte wärmeschrumpfbare Schutzschlauch wird mit einer Strahlendosis zwischen 50 kGy und 150 kGy Elektronenstrahl vernetzt.

## Patentansprüche

1. Wärmeschrumpfbarer Schutzschlauch mit verbesserter Abrieb-, Chemikalien- und Wärmeformbeständigkeit bei hohen Temperaturen, bestehend aus einer Mischung folgender Komponenten:
- a - mindestens eine Abriebkomponente, umfassend Thermoplaste mit einem Schmelzpunkt Tₘ oder Glasübergangspunkt T_{g} > 130 °C
- b - mindestens eine Weich- und/oder Rückschrumpfkomponente, umfassend Thermoplaste mit einem Schmelzpunkt Tₘ oder Glasübergangspunkt T_{g} ≤ 130 °C
- c - mindestens einer Additivkomponente

2. Wärmeschrumpfbarer Schutzschlauch nach Anspruch 1, **dadurch gekennzeichnet, dass** die Abriebkomponente aus teilkristallinen Polyamiden (PA) und/oder Polyetherblockamiden (PEBA) und/oder amorphen Polyamiden (PA) und/oder hochschmelzenden Polyolefinen besteht.

3. Wärmeschrumpfbarer Schutzschlauch nach Anspruch 1, **dadurch gekennzeichnet, dass** die Weich- und/oder Rückschrumpfkomponente aus teilkristallinen Polyamiden und/oder amorphen Polyamiden und/oder Polyetherblockamiden (PEBA) und/oder thermoplastischen Polyurethanen (TPU) und/oder Polyolefinen und/oder Polymeren mit funktionellen Gruppen besteht.

4. Wärmeschrumpfbarer Schutzschlauch nach Anspruch 3, **dadurch gekennzeichnet, dass** die Polymere mit funktionellen Gruppen aus Maleinsäureanhydrid-(MAH)-gepfropften (g) Polymeren und/oder aus Acrylsäure-(AA)-gepfropften Polymeren und/oder aus Glycidylmethacrylat-(GMA)-gepfropften Polymeren und/oder aus Polybutadien-MAH-Addukten und/oder hydroxyterminierte Polybutadienen und/oder aus Polymeren, welche GMA- und/oder MAH-Terpolymere sind.

5. Wärmeschrumpfbarer Schutzschlauch nach Anspruch 1, **dadurch gekennzeichnet, dass** die Additivkomponente aus Materialien wie Vernetzer und/oder Vernetzungsverstärker und/oder Stabilisatoren und/oder Gleitmittel und/oder Antistatika und/oder Flammschutzmittel und/oder Färbemittel und/oder geruchs- und/oder geschmackssensitiven Stoffe und/oder Hilfsstoffe zur Erhöhung der Abrieb- und/oder Temperaturbeständigkeit, und/oder Ruße und/oder Graphite und/oder exfolierte Graphite und/oder Silikate und/oder Nanofüllstoffe und/oder Weichmacher und/oder anorganische und/oder organische Treib- und Nukleierungsmittel besteht.

6. Wärmeschrumpfbarer Schutzschlauch nach Anspruch 1, **dadurch gekennzeichnet, dass** der Aufbau ein- oder mehrlagig/-schichtig ausgeführt ist.

7. Wärmeschrumpfbarer Schutzschlauch nach Anspruch 6, **dadurch gekennzeichnet, dass** im Falle eines zweilagigen/-schichtigen Aufbaus die Außenschicht abriebfest und die Innenschicht flexibel ausgeführt ist.

8. Wärmeschrumpfbarer Schutzschlauch nach Anspruch 7, **dadurch gekennzeichnet, dass** die flexible Innenschicht aus einer Mischzusammensetzung mit Anteilen von Polyamiden und/oder Polyetherblockamiden und/oder thermoplastischen Polyurethanen und/oder Polyolefinen und/oder Polymeren mit funktionellen Gruppen und Additiven besteht.

9. Wärmeschrumpfbarer Schutzschlauch nach Anspruch 7, **dadurch gekennzeichnet, dass** die abriebfeste Außenschicht aus einer Mischzusammensetzung mit Anteilen von Polyamiden und/oder Polyetherblockamiden und/oder Polyolefinen und Additiven besteht.

10. Wärmeschrumpfbarer Schutzschlauch nach Anspruch 7, **dadurch gekennzeichnet, dass** die abriebfeste Außenschicht aus einer Mischzusammensetzung mit Anteilen von Polyamiden und/oder Polyetherblockamiden und/oder thermoplastischen Polyurethanen und Polymeren mit funktionellen Gruppen und Additiven besteht.

11. Wärmeschrumpfbarer Schutzschlauch nach Anspruch 7, **dadurch gekennzeichnet, dass** die abriebfeste Außenschicht aus einer Mischzusammensetzung mit Anteilen von Polyolefinen und Additiven besteht.

12. Wärmeschrumpfbarer Schutzschlauch nach Anspruch 7, **dadurch gekennzeichnet, dass** die abriebfeste Außenschicht aus einer Mischzusammensetzung mit Anteilen von Polyolefinen und Polymeren mit funktionellen Gruppen und Additiven besteht.

13. Wärmeschrumpfbarer Schutzschlauch nach Anspruch 7, **dadurch gekennzeichnet, dass** die flexible Innenschicht aus einer Mischzusammensetzung mit Anteilen von Polyamiden und/oder Polyetherblockamiden und/oder thermoplastischen Polyurethanen und/oder Polyolefinen und/oder Polymeren mit funktionellen Gruppen und Additiven besteht.

14. Wärmeschrumpfbarer Schutzschlauch nach Anspruch 13, **dadurch gekennzeichnet, dass** die flexible Innenschicht aus einer Mischzusammensetzung mit Anteilen von Polyamiden und/oder Polyetherblockamiden und/oder thermoplastischen Polyurethanen und Additiven besteht.

15. Wärmeschrumpfbarer Schutzschlauch nach Anspruch 13, **dadurch gekennzeichnet, dass** die flexible Innenschicht aus einer Mischzusammensetzung mit Anteilen von Polyamiden und/oder Polyetherblockamiden und/oder thermoplastischen Polyurethanen und Polymeren mit funktionellen Gruppen und Additiven besteht.

16. Wärmeschrumpfbarer Schutzschlauch nach Anspruch 13, **dadurch gekennzeichnet, dass** die flexible Innenschicht aus einer Mischzusammensetzung mit Anteilen von Polyolefinen und Additiven besteht.

17. Wärmeschrumpfbarer Schutzschlauch nach Anspruch 13, **dadurch gekennzeichnet, dass** die flexible Innenschicht aus einer Mischzusammensetzung mit Anteilen von Polyolefinen und Polymeren mit funktionellen Gruppen und Additiven besteht.

18. Wärmeschrumpfbarer Schutzschlauch nach einem der Ansprüche 7 bis 17, **dadurch gekennzeichnet, dass** das Schichtdickenverhältnis der Wandstärken der Außenschicht zur Wandstärke der Innenschicht maximal eins zu eins beträgt.

19. Wärmeschrumpfbarer Schutzschlauch nach Anspruch 6, **dadurch gekennzeichnet, dass** der wärmeschrumpfbare Schutzschlauch einen dreilagigen/-schichtigen Aufbau aus einer abriebfesten Außenschicht, einer Zwischenschicht und einer flexiblen Innenschicht besteht.

20. Wärmeschrumpfbarer Schutzschlauch nach Anspruch 6 oder 19, **dadurch gekennzeichnet, dass** die abriebfeste Außenschicht aus einer Mischzusammensetzung mit Anteilen von Polyamiden und/oder Polyetherblockamiden und/oder thermoplastischen Polyurethanen und/oder Polyolefinen und/oder Polymeren mit funktionellen Gruppen und Additiven besteht.

21. Wärmeschrumpfbarer Schutzschlauch nach Anspruch 20, **dadurch gekennzeichnet, dass** die abriebfeste Außenschicht aus einer Mischzusammensetzung mit Anteilen von Polyamiden und/oder Polyetherblockamiden und/oder thermoplastischen Polyurethanen und Additiven besteht.

22. Wärmeschrumpfbarer Schutzschlauch nach Anspruch 20, **dadurch gekennzeichnet, dass** die abriebfeste Außenschicht aus einer Mischzusammensetzung mit Anteilen von Polyamiden und/oder Polyetherblockamiden und/oder thermoplastischen Polyurethanen und Polymeren mit funktionellen Gruppen und Additiven besteht.

23. Wärmeschrumpfbarer Schutzschlauch nach Anspruch 20, **dadurch gekennzeichnet, dass** die abriebfeste Außenschicht aus einer Mischzusammensetzung mit Anteilen von Polyolefinen und Additiven besteht.

24. Wärmeschrumpfbarer Schutzschlauch nach Anspruch 20, **dadurch gekennzeichnet, dass** die abriebfeste Außenschicht aus einer Mischzusammensetzung mit Anteilen von Polyolefinen und Polymeren mit funktionellen Gruppen und Additiven besteht.

25. Wärmeschrumpfbarer Schutzschlauch nach Anspruch 6 oder 19, **dadurch gekennzeichnet, dass** die Zwischenschicht aus einer Mischzusammensetzung mit Anteilen von Polyamiden und/oder Polyetherblockamiden und/oder thermoplastischen Polyurethanen und/oder Polyolefinen und/oder Polymeren mit funktionellen Gruppen und Additiven besteht.

26. Wärmeschrumpfbarer Schutzschlauch nach Anspruch 25, **dadurch gekennzeichnet, dass** die Zwischenschicht aus einer Mischzusammensetzung mit Anteilen von Polyamiden und/oder Polyetherblockamiden und/oder thermoplastischen Polyurethanen und Additiven besteht.

27. Wärmeschrumpfbarer Schutzschlauch nach Anspruch 25, **dadurch gekennzeichnet, dass** die Zwischenschicht aus einer Mischzusammensetzung mit Anteilen von Polyamiden und/oder Polyetherblockamiden und/oder thermoplastischen Polyurethanen und Polymeren mit funktionellen Gruppen und Additiven besteht.

28. Wärmeschrumpfbarer Schutzschlauch nach Anspruch 25, **dadurch gekennzeichnet, dass** die Zwischenschicht aus einer Mischzusammensetzung mit Anteilen von Polyolefinen und Additiven besteht.

29. Wärmeschrumpfbarer Schutzschlauch nach Anspruch 25, **dadurch gekennzeichnet, dass** die Zwischenschicht aus einer Mischzusammensetzung mit Anteilen von Polyolefinen und Polymeren mit funktionellen Gruppen und Additiven 2 bis 5 besteht.

30. Wärmeschrumpfbarer Schutzschlauch nach Anspruch 25, **dadurch gekennzeichnet, dass** die Zwischenschicht aus einer Mischzusammensetzung mit Anteilen von Polymeren mit funktionellen Gruppen und Additiven besteht.

31. Wärmeschrumpfbarer Schutzschlauch nach Anspruch 6 und 19, **dadurch gekennzeichnet, dass** die flexible Innenschicht aus einer Mischzusammensetzung mit Anteilen von Polyamiden und/oder Polyetherblockamiden und/oder thermoplastischen Polyurethanen und/oder Polyolefinen und/oder Polymeren mit funktionellen Gruppen und Additiven besteht.

32. Wärmeschrumpfbarer Schutzschlauch nach Anspruch 31, **dadurch gekennzeichnet, dass** die flexible Innenschicht aus einer Mischzusammensetzung mit Anteilen von Polyamiden und/oder Polyetherblockamiden und/oder thermoplastischen Polyurethanen und Additiven besteht.

33. Wärmeschrumpfbarer Schutzschlauch nach Anspruch 31, **dadurch gekennzeichnet, dass** die flexible Innenschicht aus einer Mischzusammensetzung mit Anteilen von Polyamiden und/oder Polyetherblockamiden und/oder thermoplastischen Polyurethanen und Polymeren mit funktionellen Gruppen und Additiven besteht.

34. Wärmeschrumpfbarer Schutzschlauch nach Anspruch 31, **dadurch gekennzeichnet, dass** die flexible Innenschicht aus einer Mischzusammensetzung mit Anteilen von Polyolefinen und Additiven besteht.

35. Wärmeschrumpfbarer Schutzschlauch nach Anspruch 31, **dadurch gekennzeichnet, dass** die flexible Innenschicht aus einer Mischzusammensetzung mit Anteilen von Polyolefinen und Polymeren mit funktionellen Gruppen und Additiven besteht.

36. Wärmeschrumpfbarer Schutzschlauch nach Anspruch 31, **dadurch gekennzeichnet, dass** die flexible Innenschicht aus einer Mischzusammensetzung mit Anteilen von Polymeren mit funktionellen Gruppen und Additiven besteht.

37. Wärmeschrumpfbarer Schutzschlauch nach einem der Ansprüche 19 bis 36, **dadurch gekennzeichnet, dass** das Schichtdickenverhältnis der Wandstärken der Außenschicht zur Wandstärke der Innenschicht maximal eins zu eins beträgt.

38. Wärmeschrumpfbarer Schutzschlauch nach einem der Ansprüche 19 bis 37, **dadurch gekennzeichnet, dass** das Schichtdickenverhältnis der Wandstärken der Außenschicht zur Wandstärke der Zwischenschicht maximal zehn zu eins ist.

39. Wärmeschrumpfbarer Schutzschlauch nach einem der Ansprüche 9 - 12 und 20 - 24, **dadurch gekennzeichnet, dass** die abriebfeste Außenschicht eine Gradientenschicht ist und die einzelnen Schichten dieser abriebfesten Gradientenaußenschicht in den Einzelkomponenten einen stufenartigen und/oder kontinuierlichen Konzentrationsgradienten besitzen.

40. Wärmeschrumpfbarer Schutzschlauch nach einem der Ansprüche 25 - 30, **dadurch gekennzeichnet, dass** die Zwischenschicht eine Gradientenschicht ist und die einzelnen Schichten dieser Gradientenzwischenschicht in den Einzelkomponenten einen stufenartigen und/oder kontinuierlichen Konzentrationsgradienten besitzen.

41. Wärmeschrumpfbarer Schutzschlauch nach einem der Ansprüche 14 - 17 und 31 - 36, **dadurch gekennzeichnet, dass** die flexible Innenschicht eine Gradientenschicht ist und die einzelnen Schichten dieser flexiblen Gradienteninnenschicht in den Einzelkomponenten einen stufenartigen und/oder kontinuierlichen Konzentrationsgradienten besitzen.

42. Wärmeschrumpfbarer Schutzschlauch nach Anspruch 39 bis 41, **dadurch gekennzeichnet, dass** die Schichtdicken der einzelnen Gradientenschichten gleich und/oder ungleich sind.

43. Wärmeschrumpfbarer Schutzschlauch nach einem der vorgenannten Ansprüche, **dadurch gekennzeichnet, dass** in der abriebfesten Gradientenaußenschicht und/oder Gradientenzwischenschicht und/oder Gradienteninnenschicht die Konzentration der Abriebkomponenten vom Gesamtaußenradius zum Gesamtinnenradius abnimmt.

44. Wärmeschrumpfbarer Schutzschlauch nach einem der Ansprüche 39 - 43, **dadurch gekennzeichnet, dass** in der abriebfesten Gradientenaußenschicht und/oder Gradientenzwischenschicht und/oder Gradienteninnenschicht die Konzentration der geruchs- und/oder geschmackssensitiven Stoffe nach Anspruch 5 vom Gesamtaußenradius zum Gesamtinnenradius abnimmt.

45. Wärmeschrumpfbarer Schutzschlauch nach einem der Ansprüche 39 - 44, **dadurch gekennzeichnet, dass** in der abriebfesten Gradientenaußenschicht und/oder Gradientenzwischenschicht und/oder Gradienteninnenschicht die Konzentration der Ruße und/oder Graphite und/oder exfolierte Graphite und/oder Silikate und/oder Nanofüllstoffe nach Anspruch 5 vom Gesamtaußenradius zum Gesamtinnenradius abnimmt.

46. Wärmeschrumpfbarer Schutzschlauch nach einem der Ansprüche 39 - 45, **dadurch gekennzeichnet, dass** in der abriebfesten Gradientenaußenschicht und/oder Gradientenzwischenschicht und/oder Gradienteninnenschicht die Konzentration der Weich- und/oder Rückschrumpfkomponenten vom Gesamtaußenradius zum Gesamtinnenradius zunimmt.

47. Wärmeschrumpfbarer Schutzschlauch nach einem der vorgenannten Ansprüche, **dadurch gekennzeichnet, dass** der wärmeschrumpfbare Schutzschlauch in einem Extrusions- und/oder Koextrusionsverfahren hergestellt wird.

48. Wärmeschrumpfbarer Schutzschlauch nach Anspruch 1 bis 47, **dadurch gekennzeichnet, dass** der wärmeschrumpfbare Schutzschlauch mit einer Strahlendosis zwischen 50 kGy und 150 kGy Elektronenstrahl vernetzt ist.
